Europäisches Patentamt

European Patent Office

Office européen des brevets

(11) Veröffentlichungsnummer: **0 583 704 A2**

## EUROPÄISCHE PATENTANMELDUNG

(21) Anmeldenummer: **93112632.0**

(22) Anmeldetag: **06.08.93**

(51) Int. Cl.5: **C08J 9/08**, //C08L69/00, C08L67/00,C08L81/06

(30) Priorität: **19.08.92 DE 4227370**

(43) Veröffentlichungstag der Anmeldung: **23.02.94 Patentblatt 94/08**

(84) Benannte Vertragsstaaten: **DE ES FR GB IT**

(71) Anmelder: **BAYER AG**

**D-51368 Leverkusen(DE)**

(72) Erfinder: **Ebert, Wolfgang, Dr.**
**Doerperhofstrasse 31**
**D-47800 Krefeld(DE)**
Erfinder: **Beer, Wolfgang, Dr.**
**Heyenfeldweg 132**
**D-47802 Krefeld(DE)**
Erfinder: **Köhler, Burkhard, Dr.**
**Mündelheimer Strasse 94**
**D-47829 Krefeld(DE)**
Erfinder: **Kirsch, Jürgen, Dr.**
**Völklingerstrasse 20**
**D-51375 Leverkusen(DE)**
Erfinder: **Dhein, Rolf, Dr.**
**Deswatinesstrasse 30**
**D-47800 Krefeld(DE)**
Erfinder: **Horn, Klaus, Dr.**
**Bodelschwinghstrasse 12**
**D-47800 Krefeld(DE)**

(54) **Recycelbarer Thermoplastschaum.**

(57) Gegenstand der vorliegenden Erfindung sind Thermoplastschäume, wobei als Verschäumungsagentien $\beta$-Ketocarbonsäuren, $\beta$-Ketocarbonsäureester oder tert.-Butylester organischer Säuren verwendet werden.

Gegenstand der Erfindung sind hochtemperaturbeständige Thermoplastschäume besonders solche auf Basis von überwiegend amorphen Thermoplasten, wobei Polycarbonate, Polyester und Polyester(carbonate) besonders bevorzugt sind, dadurch gekennzeichnet, daß als Verschäumungsagentien β-Ketocarbonsäuren, β-Ketocarbonsäureester oder tert.-Butylester organischer Säuren verwendet werden, die auch bei Reextrusion, zu keinem signifikanten Molekulargewichtsabbau und keiner störenden Verfärbung des Schaumes führen. Die erfindungsgemäßen Schäume werden durch Verarbeitung von 0,01 Gew.-% bis 10 Gew.-%, vorzugsweise 0,1 Gew.-% bis 8 Gew.-%, besonders bevorzugt 0,1 Gew.-% bis 5 Gew.-%, einer β-Ketocarbonsäure, β-Ketocarbonsäureester oder tert.-Butylester organischer Säuren mit Thermoplasten, bevorzugt Polycarbonaten, Polyestern und Polyester(carbonaten) auf dem Extruder erhalten.

Schaumstoffe aus hochmolekularen Polycarbonaten sind bekannt (siehe beispielsweise DE-AS 1 031 507). Als Treibmittel sind beispielsweise solche geeignet, die $CO_2$ abspalten oder inerte Gase wie $N_2$ oder $CO_2$.

Dabei beobachtet man im allgemeinen einen deutlichen Abbau der Molekulargewichte. Die nicht flüchtigen Spaltprodukte des Treibmittels verbleiben in den Schaumstoffen.

Es ist auch bekannt, daß man aromatische Polycarbonate nur in vollständig trockenem Zustand einwandfrei verarbeiten kann. Darin enthaltene Feuchtigkeit führt bei der Verarbeitung zum Abbau des Molekulargewichtes und zur Bildung von Blasen (vgl. Plastics Technology 10, 1964, S. 32 bis 36, GB-PS 841 652).

Die Aufgabe bestand daher darin, einen feinporigen Schaum zu entwickeln, der auch bei Reextrusion, gegebenenfalls Wiederverschäumung keinen oder nur geringen Molekulargewichtsabbau zeigt. Das Problem wurde mit den erfindungsgemäßen β-Ketocarbonsäuren, β-Ketocarbonsäureestern oder tert.-Butylestern organischer Säuren gelöst.

Gegenstand der Erfindung sind daher hochtemperaturbeständige Thermoplastschäume besonders solche auf Basis von überwiegend amorphen Thermoplasten, wobei aromatische Polycarbonate aromatische Polyester und aromatische Polyestercarbonate besonders bevorzugt sind, das dadurch gekennzeichnet ist, daß als Verschäumungsagentien β-Ketocarbonsäuren, β-Ketocarbonsäureester oder tert.-Butylester organischer Säuren oder deren Mischungen, besonders bevorzugt tert.-Butylester von β-Ketocarbonsäuren, in Mengen von 0,01 Gew.-% bis 10 Gew.-%, vorzugsweise 0,1 Gew.-% bis 8 Gew.-%, besonders bevorzugt 0,1 Gew.-% bis 5 Gew.-% verwendet werden.

Gegenstand der vorliegenden Erfindung ist außerdem ein Verfahren zum Verschäumen von hochtempraturbeständigen Thermoplasten, das dadurch gekennzeichnet ist, daß man die Thermoplasten mit den erfindungsgemäßen Verschäumungsagenteien in den erfindungsgemäßen Mengen mischt und entweder bei Temperaturen von 220°C bis 380°C im Extruder ohne Anlegung von Vakuum zu geschäumten Formkörpern extrudiert oder bei Temperaturen von 220°C bis 380°C in Spritzgußmaschinen zu verschäumten Formkörpern spritzgießt.

Wiederum sind als hochtemperaturbeständige Thermoplasten aromatische Polycarbonate aromatische Polyester und aromatische Polyestercarbonate besonders bevorzugt.

Hochtemperaturbeständig im Sinne der vorliegenden Erfindung heißt Glasübergangstemperaturen von ≧ 120°C.

Hochtemperaturbeständige Thermoplasten die zur Verschäumung verwendet werden sind solche, die überwiegend amorph oder transparent sind, wie z.B. transparente Polyamide, wie sie - ohne einschränkend zu wirden - aus Adipinsäure und Hexamethylendiamin zusammen mit anderen Carbonsäuren wie Tere-/Iso-/ Phthalsäure und/oder Dimerfettsäuren hergestellt werden; Polyethersulfone, Polysulfone und Polyetherketone aus 4,4'-Dichlordiphenylsulfon bzw. 4,4-Difluorbenzophenon und einer oder mehreren der unter den Polycarbonatbausteinen genannten aromatischen Dihydroxyverbindungen, sofern das entsprechende Polymer überwiegend amorph ist: sowie insbesondere aromatische Polycarbonate, aromatische Polyester und aromatische Polyestercarbonate und deren Siloxan- oder Dimerfettsäure-haltigen Blockcopolymeren.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind (siehe beispielsweise H. Schnell, Chemistry and Physics of Polycarbonates, Interscience Pulishers, New York, 1964, US-Patent 3 028 365 und deutsche Offenlegungsschrift 3 832 396 (Le A 26 344)).

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Die Diphenole können sowohl alleine als auch im Gemisch miteinander verwendet werden, es sind also sowohl Homopolycarbonate als auch Copolycarbonate einbezogen. Die Diphenole sind lite-raturbekannt oder nach literaturbekannten Verfah-ren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenoli-schen Hydroxylgruppen, mitverwendet werden. Ei-nige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-heptan-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan
und
1,4-Bis-(4',4''-dihydroxytriphenyl)-methyl-benzol.

Weitere mögliche Verzweiger sind 2,4-Dih-ydroxybenzoesäure und deren Chloride, Trimesin-säure und deren Chloride, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel, gelöst vor der Phosgenierung, zugegeben werden.

Geeignete Molekulargewichtsregler sind die bekannten, vorzugsweise Monophenole.

Die aromatischen Polycarbonate gemäß vorlie-gender Erfindung sollen Gewichtsmittelmolekular-gewichte $\overline{M}_w$ (ermittelt mittels Gelpermeations-Chromatographie) zwischen 12000 und 50 000, vorzugsweise zwischen 15 000 und 35 000 haben.

Die Lösungsviskositäten liegen entsprechend zwischen 1,15 und 1,35, gemessen in Dichlormethan (0,5 g/100 ml).

Für die Herstellung der thermoplastischen aro-matischen Polyestercarbonate geeignete aromati-sche Dicarbonsäuren sind beispielsweise Orthopht-halsäure, Terephthalsäure, Isophthalsäure, tert.-Bu-tylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via $COCl_2$ oder via Diphenylcarbonat in die Polyestercarbonate eingebaut werden, je nach Wahl des Herstellungsverfahrens, also je nachdem, ob Phasen-grenzflächenpolykondensation oder Schmelzume-sterung zur Polyestercarbonatherstellung verwen-det wird.

Entsprechendes gilt für die aromatischen Dicarbonsäuren; sie werden entweder als aromati-sche Dicarbonsäuredichloride im Zweiphasen-grenzflächenverfahren oder als Dicarbonsäuredie-ster im Schmelzumesterungsverfahren eingesetzt. Entsprechendes gilt, falls als Kettenabbrecher Monocarbonsäuren eingesetzt werden.

Die Herstellung der erfindungsgemäß zu ver-schäumenden Polyestercarbonate erfolgt nach be-kannten Herstellungsverfahren, also wie bereits er-wähnt beispielsweise nach dem Phasengrenzflä-chenverfahren oder nach dem Schmelzumeste-rungsverfahren.

Die zu verschäumenden Polyester(carbonate) können somit sowohl linear als auch in bekannter Weise verzweigt sein.

Die aromatischen Polyester(carbonate) gemäß vorliegender Erfindung haben mittlere Gewichtsmittelmolekulargewichte $\overline{M}w$ (ermittelt mittels Gelpermeations-Chromatographie) zwischen 12000 und 50 000, vorzugsweise zwischen 15 000 und 35 000. Die Lösungsviskositäten liegen entsprechend zwischen 1,15 und 1,35, gemessen in Dichlormethan (0,5 g/100 ml).

Die molare Menge an Carbonat-Einheiten zu aromatischen Dicarboxylateinheiten in den erfindungsgemäß zu verschäumenden Polyester-(carbonaten) liegt zwischen 0 und 95 Mol-% bezogen auf die Summe der Carbonat- und Estereinheiten, bevorzugt zwischen 0 und 80 Mol-%, besonders bevorzugt zwischen 0 und 70 Mol-%.

Thermoplastische aromatische Polyester im Sinn der vorliegenden Erfindung sind die aus den vorstehend genannten Dicarbonsäuren, Diphenolen, Kettenabbrechern und gegebenenfalls Verzweigern ohne Kohlensäurederivate erhaltenen Produkte, die also 0 Mol-% Carbonat-Einheiten enthalten. Ihr Herstellung ist literaturbekannt. Die Molukargewichte und Lösungsviskositäten entsprechen denen der vorstehend beschriebenen Polyestercarbonate.

Erfindungsgemäß einzusetzende Verschäumungsmittel sind $\beta$-Ketocarbonsäuren, wie z.B. Malonsäure, Acetondicarbonsäure, Cyclopentanon-2,5-dicarbonsäure, Cyclohexanon-2,6-dicarbonsäure, 1,4-Cyclohexandion-2,5-dicarbonsäure sowie deren Methyl-, Ethyl-, Propyl-, Butyl, i-Butyl-, tert.-Butyl-, Amyl-, Benzyl-, Phenyl-, Halb- oder Diester; ferner $\beta$-Ketocarbonsäure wie Acetessigsäure, Benzoylessigsäure, Cyclopentanon-2-carbonsäure, Cyclohexanon-2-carbonsäuresowie deren Methyl-, Ethyl-, Propyl-, Butyl-, i-Butyl-, tert.-Butyl-, Amyl-, Benzyl-, Phenylester; sowie tert.-Butylester organischer Säuren oder Dicarbonsäuren, wie z.B. Kohlensäuredi-tert.-butylester, Dikohlensäuredi-tert.-butylester, Essigsäure-, tert.-Butylester, Bernsteinsäuredi- oder -mono-tert.-butylester, Oxalsäuredi/mono-tert.-butylester, Brenztraubensäure-tert.-butylester, Phenylessigsäure-tert.-butylester, Benzoesäure-tert.-butylester, Ameisensäure-tert.-butylester.

Bevorzugt sind Acetessigsäure, Cyclohexanon-2-carbonsäure, 1,4-Cyclohexandion-2,6-dicarbonsäuren und deren Ester.

Besonders bevorzugt sind die tert.-Butylester der Acetessigsäure, Cyclohexan-2-carbonsäure und der 1,4-Cyclohexandiol-2,6-dicarbonsäure.

Die Verschäumungsmittel können einzeln oder im Gemisch verwendet werden, wobei bezogen auf den zu verschäumenden Thermoplasten 0,01 Gew.-% bis 10 Gew.-%, vorzugsweise 0,05 bis 8 Gew.-%, besonders bevorzugt 0,1 bis 5 Gew.-% eingesetzt werden.

Die erfindungsgemäße Verschäumung kann noch unter Zusatz von für die Schaumherstellung üblichen Additiven wie Verstärkungsstoffen, beispielsweise Glasfasern, Füllstoffen und/oder Nucleierungsmitteln und/oder Flammschutzmitteln und/oder Entformungsmitteln und/oder Gleitmitteln und/oder Fließhilfmitteln und/oder Farbstoffen und/oder Pigmenten, beispielsweise Rutil oder Ruß und/oder Stabilisatoren gegen Hitze, UV-Strahlung und Feuchtigkeit durchgeführt werden.

Übliche Additive, wie sie den erfindungsgemäßen Schäumen zugesetzt werden können, sind insbesondere Flammschutzadditive, wie z.B. Salze fluorierter oder perfluorierter $C_{1-12}$-Carbonsäuren, bevorzugt fluorierte oder perfluorierte $C_{1-6}$-Carbonsäuren, wobei die Alkalisalze, besonders die Natrium- und Kaliumsalze, bevorzugt sind. Weiterhin können die Salze aliphatischer oder aromatischer, gegebenenfalls substituierter Sulfonsäuren verwendet werden oder auch Ammonium- bzw. Phosphoniumsalze, Phosphate, Phosphite und Polyphosphonate. Andere für die erfindungsgemäßen Thermoplastschäume geeignete Flammschutzmittel sind bromierte und/oder chlorierte organische Verbindungen, wie chlorierte oder bromierte Phthalimide, Bisphthalimide, Diphenylether, Bisphenole, oligomere Polycarbonate aus chlorierten oder bromierten Bisphenolen sowie fluorierte Polyolefine, wie z.B. Polytetrafluorethylen incl. der literaturbekannten Copolymeren, wobei feinverteilte Typen in mit ABS co-gefällte Typen bevorzugt sind. Auch anorganische Salze, wie Kryolithe, NaCl, $Na_2SO_4$ usw., sind als Flammschutzmittel für die erfindungsgemäßen Schäume verwendbar, wobei Kryolithe mit feiner Kornverteilung bevorzugt sind.

Alle diese Flammschutzmittel können alleine oder in Kombination mit anderen zur Verwendung kommen, wobei Mengen von 0,005 bis 10 Gew.-%, bevorzugt 0,01 bis 5 Gew.-% eingesetzt werden.

Gegenstand der vorliegenden Erfindung ist somit auch das Verschäumen von hochtemperaturbeständigen Thermoplasten mit einem Gehalt an üblichen Additiven, das dadurch gekennzeichnet ist, daß man die Thermoplasten nach Zusatz der üblichen Additve mit den erfindungsgemäßen Verschäumungsagentien mischt und entweder bei Temperaturen von 220°C bis 380°C im Extruder ohne Anlegung von Vakuum zu geschäumten Formkörpern extrudiert oder bei Temperaturen von 220°C bis 380°C in Spritzgußmaschinen zu verschäumten Formkörpern spritzgießt.

Wiederum sind als hochtemperaturbeständige Thermoplasten aromatische Polycarbonate, aromatische Polyester und aromatische Polyestercarbonate besonders bevorzugt.

Gegenstand der vorliegenden Erfindung sind außerdem die nach diesem erfindungsgemäßen Verfahren erhältlichen, Additiv-haltigen hochtempraturbeständigen Thermoplastschäume, bevorzugt Polycarbonatschäume, Polyesterschäume und Polyestercarbonatschäume.

Insbesondere können durch die Verwendung von Kieselsäure, Aluminiumoxiden oder anderen pulverigen Additiven wie sie oft als Nucleierungsmittel eingesetzt werden, auch aus flüssigen Verschäumungsmitteln rieselfähige leicht dosierbare Mischungen hergestellt werden.

Gegenstand der vorliegenden Erfindung ist somit auch hochtemperaturbeständige Thermoplastschäume, die dadurch gekennzeichnet sind, daß die erfindungsgemäßen Verschäumungsagentien in Kombination mit pulvrigen Additiven eingesetzt werden.

Gegenstand der vorliegenden Erfindung ist somit auch eine Ergänzung des erfindungsgemäßen Verfahrens, das dadurch gekennzeichnet ist, daß man die erfindungsgemäßen Verschäumungsagentien in Kombination mit pulvrigen Addtiven einsetzt.

Die Menge an pulvrigen Additiven liegt zwischen der gleichen und der doppelten Menge an jeweils eingesetzten Verschäumungsagentien.

Eine Erweiterung des erfindungsgemäßen Verfahrens ist noch dadurch möglich, daß den zu verschäumenden hochtemperaturbeständigen Thermoplasten, insbesondere den Polycarbonaten oder den Polyestercarbonaten oder den Polyestern noch andere leichter schmelzende Thermoplasten zugemischt sein können, vorzugsweise thermoplastische Polyalkylenterephthalate, ABS-Polymerisate, SAN-Polymerisate und Polyolefine in Mengen bis zu 100 Gew.-%, bezogen jeweils auf Gewicht Polycarbonat.

Das Verschäumungsverfahren wird durch die Anwesenheit dieser anderen Thermoplasten nicht blockiert,

Den erfindungsgemäß zu verschäumenden Polycarbonaten können noch die bekannten Schlagzähmodifikatoren wie beispielsweise hydrierte Butadien-Styrol-Copolymerisate oder Acrylatpfropfkautschuke in den üblichen Mengen, vorzugsweise in Mengen bis zu 10 Gew.-%, bezogen auf Gewicht Polycarbonat, zugesetzt sein.

Erfindungsgemäß mitzuverwendende thermoplastische Polyalkylenterephthalate sind beispielsweise solche auf Basis von Ethylenglykol, Propandiol-1,3, Butandiol-1,4, Hexandiol-1,6 und 1,4-Bishydroxymethylcyclohexan. Die Molekulargewichte (Mw) dieser Polyalkylenglykolterephthalate liegen zwischen 10 000 und 80 000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester aus und estert diesen mit einem Überschuß an Diol in Gegenwart geeigneter Katalysatoren zum Bis-hydroxyalkylester der Terephthalsäure um. Dabei wird die Temperatur ausgehend von 140°C auf 210°C bis 220°C erhöht Der in Freiheit gesetzte Alkohol wird abdestilliert. Die Aufkondensation erfolgt anschließend bei Temperaturen von 210°C bis 280°C, der Druck wird dabei stufenweise bis auf weniger als 1 Torr erniedrigt, wobei das überschüssige Diol abdestilliert wird.

Erfindungsgemäß mitzuverwendende thermoplastische ABS-Polymerisate sind solche, in denen auf einen Kautschuk entweder ein Monomer aus der Reihe Styrol, Methylmethacrylat oder eine Monomermischung von 95 bis 50 Gew.-% Styrol, α-Methylstyrol, Methylmethacrylat oder Mischungen daraus und 5 bis 50 Gew.-% Acrylnitril, Methylmethacrylat, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat).

Die Pfropfmischpolymerisate enthalten 5 bis 80 Gew.-%, insbesondere 20 bis 70 Gew.-% Kautschuk und 95 bis 20 Gew.-%, insbesondere 80 bis 30 Gew.-% pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 µm, insbesondere von 0,1 bis 1 µm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Erfindungsgemäß mitzuverwendende thermoplastische SAN-Polymerisate sind Copolymerisate von 95 bis 50 Gew.-Teilen Styrol, α-Methylstyrol, Methylmethacrylat oder Mischungen daraus und 5 bis 50 Gew.-Teilen Acrylnitril, Methacrylnitril, Methylmethacrylat oder Mischungen daraus, Unter diesen Copolymerisaten sind besonders bevorzugt Produkte aus etwa 80 bis 60 Gew.-% Styrol, und 20 bis 40 Gew.-% Acrylnitril, sowie die analogen Copolymerisate aus α-Methylstyrol.

Erfindungsgemäß mitzuverwendende thermoplastische Polyolefine sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel oder Molekulargewichte Mw (gemessen nach gelchromatographischen Methoden) zwischen 1000 und 3 000 000 haben. Es ist sowohl Hochdruckpolyolefin als auch Niederdruckpolyolefin brauchbar, Die ungesättigten Kohlenwasserstoffe können auch mit anderen Vinylmonomeren wie z.B. Vinylacetat in bekannter Weise copolymerisiert sein.

Die Vorabmischung der einzelnen Komponenten also der hochtemperaturbeständigen Thermoplasten, vorzugsweise der Polycarbonate, mit den Verschäumungsmitteln, üblichen Additiven, anderen Thermoplasten und/oder gegebenenfalls mit Schlazähmodifikatoren kann in bekannter Weise bei Raumtemperatur erfolgen.

Die erfindungsgemäße Verschäumung erfolgt dann auf den üblichen Maschinen.

Die erfindungsgemäß erhältlichen Schaumstoffe können zu beliebigen Formkörpern ausgeformt oder nach der Verschäumung zurechtgeschnitten werden.

Die erfindungsgemäß erhältlichen Schaumstoffformkörper können vorteilhaft als Formteile zur Herstellung großflächiger Abdeckungen von Lampen, Gehäusen, Bürogeräten oder zur Herstellung großflächiger Schrankelemente, eingesetzt werden.

Beispiele

Beispiel 1

200 g BPA-Polycarbonat ($\eta_{rel}$ = 1,295) werden zusammen mit 1 % Acetessigsäure-tert.-butylester und 1 % Kieselsäure bei 230°C extrudiert. Es wurde ein farbloser Schaum mit einer Dichte von $\sigma$ = 0,41 g/cm erhalten, Die rel. Viskosität betrug $\eta_{rel}$ = 1,285. Dieser Schaum wurde gehäckselt und
a) reextrudiert, man erhält Polycarbonat mit einer rel. Viskosität von $\eta_{rel}$ = 1,282
b) reextrudiert, wiederum mit 1 % Acetessigsäure-tert.-butylester und 1 % Kieselsäure bei 230°C extrudiert. Es wurde ein farbloser Schaum mit einer Dichte von $\sigma$ = 0,46 g/cm erhalten. Die rel. Viskosität betrug $\eta_{rel}$ = 1,285.

Beispiel 2

200 g BPA-Polycarbonat ($\eta_{rel}$ = 1,295) werden zusammen mit 1,0 Gew.-% Acetessigsäure-tert.-butylester und 2 % Kieselsäure bei 230°C extrudiert. Es wurde ein farbloser Schaum mit einer Dichte von $\sigma$ = 0,46 g/cm erhalten, Die rel. Viskosität betrug $\eta$ = 1,289.

Beispiel 3

300 g BPA-Polycarbonat $\eta$ = 1,295 werden zusammen mit 1,0 Gew.-% Acetessigsäure-tert.-butylester und 4 % Kieselsäure bei 300°C extrudiert. Es wurde ein farbloser Schaum mit einer Dichte von $\sigma$ = 0,44 g/cm$^3$ erhalten. Die rel. Viskosität betrug $\eta$ = 1,282.

Beispiel 4

200 g BPA-Polycarbonat ($\eta$ = 1,295) werden zusammen mit 2,0 Gew.-% Acetessigsäure-tert.-butylester und 4 % Kieselsäure bei 260°C extrudiert. Es wurde ein farbloser Schaum mit einer Dichte von $\sigma$ = 0,44 g/cm erhalten. Die rel. Viskosität betrug $\eta$ = 1,282.

Beispiel 5

200 g BPA-Polyester ($\eta$ = 1,295) werden zusammen mit 1,0 Gew.-% Acetessigsäureethylester und 2 % Kieselsäure bei 230°C extrudiert. Es wurde ein farbloser Schaum mit einer Dichte von $\sigma$ = 0,63 g/cm erhalten. Die rel. Viskosität betrug $\eta$ = 1,284.

Beispiel 6

200 g BPA-Polycarbonat ($\eta$ = 1,295) werden zusammen mit 0,5 Gew.-% Cyclohexanon-2-carbonsäureethylester und 2 % Kieselsäure bei 260°C extrudiert. Es wurde ein farbloser Schaum mit einer Dichte von $\sigma$ = 0,59 g/cm erhalten. Die rel. Viskosität betrug $\eta$ = 1,297.

Beispiel 7

200 g BPA-Polycarbonat ($\eta$ = 1,295) werden zusammen mit 1,0 Gew.-% Cyclohexanon-2-carbonsäureethylester und 4 % Kieselsäure bei 260°C extrudiert. Es wurde ein farbloser Schaum mit einer Dichte von $\sigma$ = 0,49 g/cm erhalten. Die rel. Viskosität betrug $\eta$ = 1,293.

Beispiel 8

200 g BPA-Polycarbonat ($\eta$ = 1,295) wurden zusammen mit 1 % Malonsäure, 1 % saurem Aluminiumoxid und 0,1 % Pentaerythrittetrastearat bei 260°C extrudiert. Es wurde ein leicht gelbstichiger Schaum mit einer Dichte von $\sigma$ = 0,43 g/cm$^3$ erhalten. Die rel. Viskosität betrug 1,271.

Beispiel 9

200 g BPA-Polycarbonat ($\eta$ = 1,295) wurden zusammen mit 0,5 Gew.-% Di-tert.-butyldicarbonat bei 260°C extrudiert. Es wurde ein farbloser Schaum mit einer Dichte von 0,46 g/cm$^3$ erhalten. Die rel. Viskosität betrug 1,277.

Beispiel 10

100 g BPA-Polycarbonat ($\eta$ = 1,295) wurden zusammen mit 2 % Essigsäure-tert.-butylester und 4 % Kieselsäure bei 260°C extrudiert. Man erhielt einen farblosen Schaum mit einer Dichte von 0,88 g/cm$^3$.

**Patentansprüche**

1. Hochtemperaturbeständige thermoplastschäume, dadurch gekennzeichnet, daß als Verschäumungsagentien $\beta$-Ketocarbonsäurem, $\beta$-Ketocarbonsäureester oder tert.-Butylester organischer Säuren oder deren Mischungen, in Mengen von 0,01 bis 10 Gew.-%, verwendet werden.

2. Thermoplastschäume gemäß Anspruch 1, dadurch gekennzeichnet, daß der Thermoplast ein aromatisches Polycarbonat und/oder ein aromatischer Polyester und/oder ein aromatisches Polyestercarbonat ist.

3. Thermoplastschäume gemäß Anspruch 1, dadurch gekennzeichnet, daß der Thermoplast ein Polysulfon oder Polyethersulfon ist.

4. Verfahren zum Verschäumen von hochtemperaturbeständigen Thermoplasten, dadurch gekennzeichnet, daß man die Thermoplasten mit $\beta$-Ketocarbonsäuren, $\beta$-Ketocarbonsäureestern oder tert.-Butylestern organischer Säuren oder deren Mischungen in Mengen von 0,01 bis 10 Gew.-% mischt und entweder bei Temperaturen von 220°C bis 380°C im Extruder ohne Anlegung von Vakuum zu geschäumten Formkörpern extrudiert oder bei Temperaturen von 220°C bis 380°C in Spritzgußmaschinen zu verschäumten Formkörpern spritzgießt.

5. Verfahren gemäß Anspruch 4, dadurch gekennzeichnet, daß man die Thermoplasten nach Zusatz der üblichen Additive mit den erfindungsgemäßen Verschäumungsagentien mischt und anschließend extrudiert oder spritzgießt.

6. Thermoplastschäume, erhältlich nach Anspruch 5.

7. Thermoplastschäume gemäß Anspruch 1, dadurch gekennzeichnet, daß die erfindungsgemäßen Verschäumungsagentien gemäß Anspruch 1 in Kombination mit pulvrigen Additiven eingesetzt werden.

8. Verfahren nach Anspruch 4, dadurch gekennzeichnet, daß man die erfindungsgemäßen Verschäumungsagentien in Kombination mit pulvrigen Additiven einsetzt.

9. Thermoplastschäume gemäß Anspruch 1, dadurch gekennzeichnet, daß die Verschäumungsagentien in Mengen von 0,1 bis 8 Gew.-% verwendet werden.

10. Thermoplastschäume gemäß Anspruch 1, dadurch gekennzeichnet, daß die Verschäumungsagentien in Mengen von 0,1 bis 5 Gew.-% verwendet werden.